Europäisches Patentamt

European Patent Office

Office européen des brevets

(11) Veröffentlichungsnummer: **0 216 020**
A2

# EUROPÄISCHE PATENTANMELDUNG

(21) Anmeldenummer: 86107892.1

(22) Anmeldetag: 10.06.86

(51) Int. Cl.⁴: **H 02 G 1/12**

(30) Priorität: 26.09.85 DE 3534299

(43) Veröffentlichungstag der Anmeldung:
01.04.87 Patentblatt 87/14

(84) Benannte Vertragsstaaten:
AT BE CH DE FR GB IT LI LU NL SE

(71) Anmelder: Elektro- und Gas-Armaturen-Fabrik GmbH
Lindenbergstrasse 5
D-5800 Hagen 5(DE)

(72) Erfinder: Heuser, Helmut, Dipl.-Ing.
Ringstrasse 37
D-5800 Hagen 8(DE)

(74) Vertreter: Patentanwälte Meinke und Dabringhaus
Dipl.-Ing. J. Meinke Dipl.-Ing. W. Dabringhaus
Westenhellweg 67
D-4600 Dortmund 1(DE)

(54) Vorrichtung zum Absetzen eines Koaxialkabelendes.

(57) Bei einer Vorrichtung zum Absetzen bzw. stufenweisen
Abisolieren und Freilegen des Innen- und Außenleiters eines
Koaxialkabelendes, soll eine Lösung geschaffen werden, mit
der diese Arbeiten mit einem Werkzeug schnell und sicher
praktisch gleichzeitig durchgeführt werden können.
   Dies wird dadurch erreicht, daß an einem über das freie
Ende des Koaxialkabels (1) stülpbaren, im wesentlichen zylindrischen, handhabbaren Gehäuse (2) ein Schälmesser (10)
zum Abschälen der Außenisolierung (5), ein Trennmesser (12)
zum Durchtrennen des Außenleiters (4) und des den Innenleiter (3) umgebenden Dielektrikums (6) und ein Endanschlag
(19) für den Innenleiter (3) vorgesehen sind.

Fig.1

EP 0 216 020 A2

"Vorrichtung zum Absetzen eines Koaxialkabelendes"

Die Erfindung richtet sich auf eine Vorrichtung zum Absetzen bzw. stufenweisen Abisolieren und Freilegen des Innen- und des Außenleiters eines Koaxialkabelendes.

Koaxialkabelenden die in Muffen Verteilerschränke o. dgl. eingeführt werden, werden in der Regel in einem vorbestimmten gleichbleibenden Maß abgesetzt, d.h. der Innenleiter wird um ein bestimmtes Maß freigelegt und der Außenleiter wird dann ebenfalls um ein bestimmtes Maß von der Außenisolierung befreit. Dies geschieht heute in der Regel mit der Hand, und zwar mit Messern wird der Außenmantel des Kabels um die entsprechende Länge entfernt, dann wird, vom freien Ende her gesehen, das Maß für die Freilegung des Innenleiters angezeichnet und dann der Außenleiter zusammen mit dem darunterliegenden Dielektrikum durchtrennt und entfernt.

Aufgabe der Erfindung ist die Schaffung einer Lösung, mit der diese Arbeiten mit einem Werkzeug schnell und sicher praktisch gleichzeitig durchgeführt werden können.

Diese Aufgabe wird gemäß der Erfindung bei einer Vorrichtung der eingangs bezeichneten Art dadurch gelöst, daß an einem über das freie Ende des Koaxialkabels stülpbaren im wesentlichen zylindrischen, handhabbaren Gehäuse ein Schälmesser zum Abschälen der Außenisolierung, ein Trennmesser zum Durchtrennen des Außenleiters und des den Innenleiter umgebenden Dielektrikums und ein Endanschlag für den Innenleiter vorgesehen sind.

Mit der Erfindung wird erreicht, daß beim Überstülpen der Vorrichtung über ein freies noch nicht abgesetztes Koaxialkabelende zunächst mittels des Schälmessers die Außenisolierung abgehoben wird und entfernt wird und dann mittels des Trennmessers die Freilegung des Innenleiters erfolgt, wobei die Maßhaltigkeit durch den Endanschlag für den Innenleiter bestimmt wird.

Die Erfindung sieht auch vor, daß das Schälmesser, das Trennmesser und der Endanschlag in ihrer Lage relativ zum Gehäuse veränderbar angeordnet sind.

Mit dieser Maßnahme wird gewährleistet, daß nicht nur die einzelnen Komponenten einjustiert werden können, sondern das man auch unterschiedliche Absetzmaße einstellen kann, wenn dies gewünscht wird.

Bei einem zylindrischen Gehäuse ist es sinnvoll, das Gehäuse mit einer zentrischen Bohrung zur Aufnahme des Koaxialkabelendes auszurüsten und die einzelnen Elemente, wie das Schälmesser, das Trennmesser und den Endanschlag dieser Bohrung zuzuordnen, wie dies die Erfindung ebenfalls vorsieht.

Um ein optimales Abschälen zu gewährleisten, sieht die Erfindung in weiterer Ausgestaltung vor, daß das Schälmesser etwa tangential zur Aufnahmebohrung des Koaxialkabelendes angeordnet ist. Wird die Vorrichtung nämlich beim Aufstülpen, z.B. im Uhrzeigersinn auf das Koaxialkabelende aufgedreht, so schält das Schälmesser die Außenisolierung spiralförmig ab.

Um das Austreten des abgeschnittenen bzw. abgeschälten Isoliermantels zu ermöglichen, sieht die Erfindung auch vor, daß dem Schälmesser eine Austrittsöffnung vorgesehen ist. Zur Erhöhung der Schneidwirkung und zur Erreichung eines optimalen Schnittes sieht die Erfindung auch vor, daß das Schälmesser in der im wesentlichen tangential ausgerichteten Montageebene in einem spitzen Winkel zur Einschubachse des Koaxialkabelendes angestellt ist.

Ist das Koaxialkabelende vollständig in die Vorrichtung eingeschoben, d.h. hat sich der Innenleiter bzw. das noch darum befindliche Dielektrikum mit dem Außenleiter am Endanschlag angelegt, so kann der Trennvorgang erfolgen.

Eine zweckmäßige konstruktive Möglichkeit den Trennvorgang in einerfacher Weise auszuführen besteht darin, daß das Trennmesser in einem Führungsschlitz am Gehäuse angeordnet und über eine Kulissenfläche an einem Verstellring in Richtung auf die Kabelmittelachse zu und von dort weg bewegbar angeordnet ist.

Ähnlich wie bei dem Schälvorgang ist es dabei sinnvoll, die Vorrichtung zu drehen und dabei das immer weiter eindringende Trennmesser um den Außenleiter herum in das Dielektrikum zu führen. Dies geschieht über die entsprechende Kulissenfläche.

Eine sinnvolle Ausgestaltung besteht darin, daß die Kulissenfläche im Verstellring als Fünrungsbahn für einen am Trennmesser angeordneten Zapfen ausgebildet ist, wobei die Führungsbahn als ein radial außen beginnender Bogen mit einem radial weiter innenliegenden Endpunkt ausgebildet ist.

Mit dieser Maßnahme wird erreicht, daß bei dem Drehen der Vorrichtung durch geringfügiges Verdrehen auch des Stellringes das Messer in die jeweils gewünschte Position verfahrbar ist. Dabei ist die Krümmung der Kulissenbahn so getroffen, daß das Verfahren des Messers in Schneidrichtung bei einer Drehung der Vorrichtung erfolgt, die gegenüber der Schäldrehrichtung umgekehrt ist.

So ist z.B. die Verstellrichtung des Stellringes in Schneidrichtung des Trennmessers dann gegen den Uhrzeigersinn gerichtet, wenn die Schälrichtung bei einer Drehung im Uhrzeigersinn der Vorrichtung erfolgt, wie dies weiter oben bereits angesprochen war.

Die Erfindung sieht auch vor, daß das Trennmesser in einem mit dem Gehäuse verbindbaren Distanzring angeordnet ist. Diese Gestaltung hat den Vorteil, daß das Maß zwischen Schälmesser einerseits und Trennmesser andererseits den jeweils gewünschten Erfordernissen angepaßt werden kann, da beispielsweise zur Abstandsvergrößerung entweder ein Zwischenring oder aber ein breiterer Distanzring mit der Führung für das Trennmesser am Gehäuse angebracht werden kann.

Der Endanschlag für den Innenleiter kann von einem die zentrische Bohrung abschließenden und darin in seiner Lage veränderbaren Schraubelement gebildet sein. Dies kann beispielsweise durch einen Gewindezapfen in einer Gewindebohrung verwirklicht sein. Umgekehrt kann, wie dies die Erfindung in weiterer Ausgestaltung auch vorsieht, der Endanschlag für den Innenleiter auf seiner rückwärtigen Seite als Entgratungswerkzeug ausgebildet sein, welches vom Innenleiter über eine rückseitige Einsteckbohrung erreichbar ist.

Eine weitere Ausgestaltung der Erfindung besteht darin, daß in dem Gehäuseteil zwischen Trennmesser und Endanschlag Fensterrungen als Durchbrechungen zur zentrischen Durchgangsbohrung vorgesehen sind. Diese Gestaltung hat den besonderen Vorteil, daß der Benutzer der Vorrichtung erkennen kann, ob der abgetrennte Außenleiter mit Isolierung zum Innenleiter noch in der Vorrichtung verbleiben ist oder bereits ausgeworfen wurde, da genau er in diesem Bereich Einblick nehmen kann.

Die Erfindung ist nachstehend anhand der Zeichnung beispielsweise näher erläutert. Diese zeigt in

Fig. 1 eine Seitenansicht der Vorrichtung teilweise geschnitten,

Fig. 2 ein abgesetztes Kabelende sowie in

Fig. 3 eine stirnseitige Aufsicht auf die Vorrichtung gemäß Pfeil III in Fig. 1.

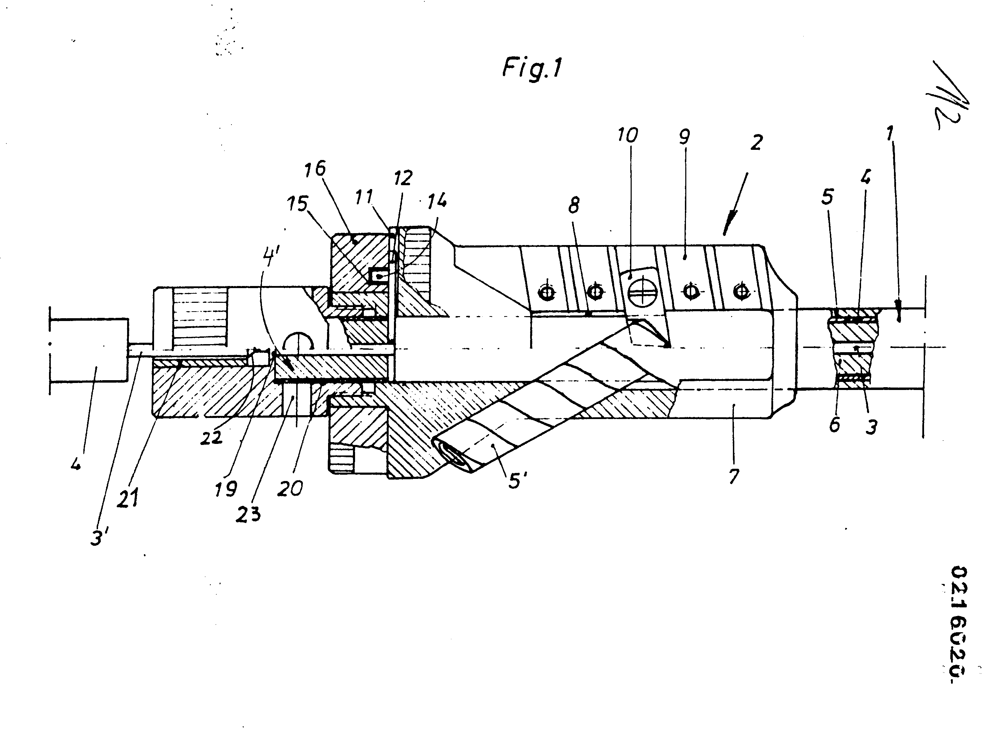

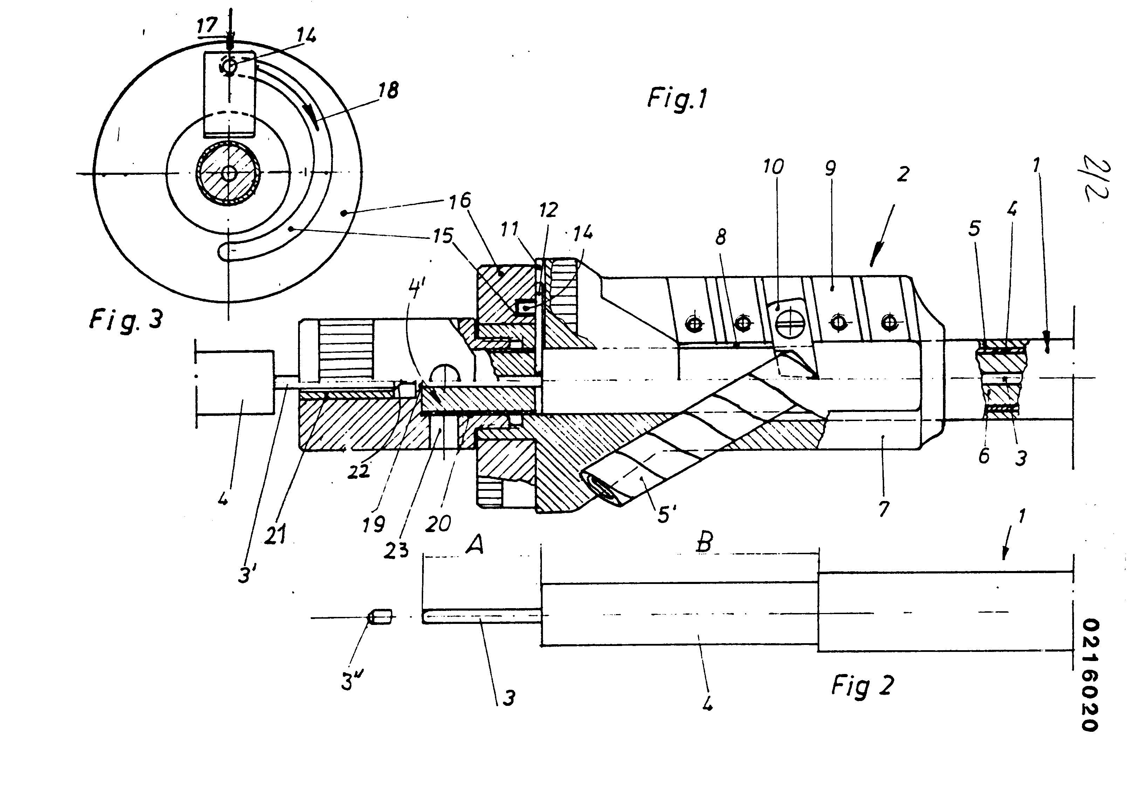

Wie in Fig. 1 dargestellt, ist auf ein Koaxialkabelende 1 eine Vorrichtung 2 nach der Erfindung aufgestülpt bzw. aufgesteckt. Diese Vorrichtung 2 dient zum sogenannten Absetzen des Koaxialkabelendes 1, d.h. zum Freilegen des Innenleiters 3 in einem bestimmten Maß "A" und zum Freilegen des Außenleiters 4 in einem Maß "B". Diese Maße sind in Fig. 1 im Bezug zur Fig. 2 eingetragen.

Um die nachfolgende Beschreibung zu erleichtern, sei der Aufbau eines Koaxialkabels 1 hier nochmals kurz erwähnt. Außen ist das Koaxialkabel mit einer Außenisolierung 5 umgeben. Darunter liegt der Außenleiter 4, der seinerseits wiederum ein Dielektrikum 6 umgibt, welches in der Mitte den Innenleiter 3 aufnimmt.

Die Vorrichtung 2 weist zunächst ein zylindrisches Gehäuse 7 auf, welches mit einer zentrischen Durchgangsbohrung 20 ausgerüstet ist, die in der Fig. 1 nur gestrichelt angedeutet wurde. Das Gehäuse 7 weist eine Wandöffnung 8 auf und in diesem Bereich eine Auflagerfläche 9 für ein Schälmesser 10. Das Schälmesser 10 ist tangential zur Durchgangsbohrung der Vorrichtung 2 angeordnet und derart einstellbar, daß es die äußere Isolierschicht 5 bei Einschub des Koaxialkabelendes 1 in die Vorrichtung 2 und beim Drehen der Vorrichtung 2 diese Isolierung 5 spiralförmig abschälen kann. Eine derart abgeschälte spiralförmige Isolierung ist in Fig. 1 teilweise gestrichelt dargestellt und mit 5` bezeichnet. Dieses Isoliermaterial tritt durch die Öffnung 8 nach außen. Wird der Vorschub des Koaxialkabelendes beendet und die Drehung der Vorrichtung 2 fortgesetzt, so schneidet die Klinge 10 dieses Außenmantelstück 5` ab. Es fällt dann aus der Vorrichtung 2.

Das Gehäuse 2 weist eine Führung 11 für ein Trennmesser 12 auf. Durch Änderung der Lage des Schälmessers 12 kann der Abstand "B" zwischen der wirksamen Schnittkante des Schälmessers 10 und des Trennmessers 12 den jeweiligen Erfordernissen angepaßt werden. In Fig. 1 ist das Trennmesser 12 in der abgesenkten, d.h. der Trennstellung dargestellt. Um das Trennmesser 12 in diese Stellung bringen zu können, ist es mit einem Stift 14 ausgerüstet, der in einer Führungsbahn 15 geführt ist, die als bogenförmiger Schlitz in einem Verstellring 16 untergebracht ist.

Um nun das Trennmesser 12 aus den Fig. 1 abgesenkten Trennstellung in eine das Einschieben eines Koaxialkabelendes 1 ermöglichende gehobene Stellung gemäß Pfeil 17 in Fig. 3 anheben zu können, muß der Verstellring 16 gegen die Richtung des Pfeiles 18 in Fig. 3 verdreht werden. Dabei gleitet der Führungszapfen 14, der fest mit dem Trennmesser 12 verbunden ist, in die Führungsbahn 15 und wird von dieser dann aufgrund ihrer radial unterschiedlichen Stellungen am Ende und am Anfang angehoben. Die Absenkung des Trennmessers erfolgt dann in der Drehrichtung des Verstellringes 16 (gemäß Pfeil 16).

Um das Maß "A" einstellen bzw. ändern zu können, kann die Durchgangsbohrung mit einem stirnseitigen Verschlußelement 19 abgeschlossen, das als Schraubelement ausgebildet sein kann, was nicht näher dargestellt ist. Dargestellt ist die Möglichkeit, daß das Verschlußelement auf seiner rückwärtigen Seite mit einem Entgratungswerkzeug 22 ausgerüstet
ist, das zur Entgratung des rückwärtig eingesteckten
Innenleiters 3´ (Fig. 1) dienen kann, der zu diesem Zwecke
in eine rückseitige Einsteckbohrung 21 eingebracht ist.
Die somit angebrachte Fase am Innenleiterende ist in Fig.
2 mit 3´´ bezeichnet.

Um für den Benutzer die Aufsicht auf das abzutrennende
Teil des Außenleiters, in Fig. 1 mit 4´ bezeichnet, zu
ermöglichen, sind im Endbereich Fensterrungen 23 vorgesehen, die bis zur Innenbohrung 20 führen und im dargestellten Beispiel als Bohrungen ausgebildet sind. Der
Benutzer kann somit erkennen, ob sich noch das abgetrennte
Stück 4´ des Außenleiters mit samt der Innenisolierung in
der Vorrichtung befindet oder ob dieses bereits ausgetragen wurde.

Die Wirkungsweise der Vorrichtung ist die folgende:

Wie weiter oben schon angegeben, wird ein Koaxialkabelende
1 in die Durchgangsbohrungen 20 im Gehäuse 2 eingeschoben
und dabei wird entweder das Koaxialkabelende oder die Vorrichtung gedreht. Bei dieser Dreh- und Schubbewegung
schält das Schälmesser 10 die Außenisolierung 5 spiralförmig ab. Stößt das Koaxialkabelende 1 schließlich an das
Schraubelement 19 mit Endanschlag, ist eine weitere Vorschubbewegung nicht mehr möglich, so daß das Schälmesser 10 eine volle Umdrehung am gleichen Ort ausüben kann, so daßdie Außenisolierung 5˘ gänzlich abgeschnitten wird und abfällt. Nunmehr wird das Gehäuse 2 beispielsweise in umgekehrter Drehrichtung verdreht und gleichzeitig der Stellring 16 geringfügig mit verdreht, so daß das Trennmesser 12 aus seiner in Fig. 3 näher dargestellten oberen Stellung in die in Fig. 1 dargestellte abgesenkte Stellung verbracht wird und bei dieser gleichzeitigen Dreh- und Absenkbewegung sowohl den Außenleiter 4 als auch das Dielektrikum 6 zertrennt. Durch die Anordnung der Führungsbahn 15 kann die Eintauchtiefe des Trennmessers 12 genau fixiert werden, so daß der Innenleiter 3 in der abgesenkten Stellung des Trennmessers 12 nicht berührt wird. Nunmehr kann das Koaxialkabelende 1 aus dem Gehäuse 2 ausgezogen werden und weist dann den Zustand auf, wie er in Fig. 2 dargestellt ist. Der um das Maß "A" abgetrennte Außenleiter 4˘ mit dem Dielektrikum kann aus der Vorrichtung nach dem Anheben des Messers 12 fallen.

Wesentlich ist, daß der Durchmesser der Vorrichtung, der vom Benutzer ergriffen wird und in Ruhe verbleibt, gegenüber dem Durchmesser des Verstellringes 16 größer ausgestaltet ist, um damit ein zu starkes Andrehen der Messerverstellung zu vermeiden. Dabei wird die Messerverstellung im Gegenuhrzeigersinn betrieben, also in umgekehrter Richtung als die gekrümmte Pfeilausbildung 18 in Fig. 3, während die Schälbewegung der Vorrichtung, d.h.
an sich die Hauptarbeitsrichtung der Vorrichtung in Rechtsdrehung erfolgt. Mit dieser umgekehrten Drehrichtung wird
durch ganz einfache Mittel erreicht, daß das Trennmesser
12 bei der Schälbewegung in der oberen angehobenen
Stellung verbleibt, ist es zunächst dort nicht, wird es
durch die Rechtsdrehung der Schälrichtung in diese obere
Position verfahren. Durch Linksdrehung des Ringes 16 wird
in das Schälmesser eingetrieben, um den Außenleiter 4 mit
dem Dilektrikum 6 abzutrennen (Pfeil 17 in Fig. 3.)

Natürlich ist das beschriebene Ausführungsbeispiel der Erfindung noch in vielfacher Hinsicht abzuändern ohne den
Grundgedanken zu verlassen. So kann beispielsweise das
Schälmesser 10 in der Auswurföffnung 8 neben der im dargestellten Beispiel wiedergegebenen Längsführung die im
spitzen Winkel zur Mittelachse der Einschubrichtung ausgerichtet ist auch in einer Querführung angeordnet sein, um
z.B. durch Verstellen des Schälmessers 10 das Maß "B" beeinflussen zu können. Das Gehäuse 2 kann ein- und mehrteilig sein. Es kann mit weiteren materialeinsparenden Durchbrüchen versehen sein u. dgl. mehr. Die Vorrichtung kann
aus Kunststoff gefertigt sein oder aus Leichtmetall u.
dgl. mehr.

**0216020**

Ansprüche :

1. Vorrichtung zum Absetzen bzw. stufenweisen Abisolieren und Freilegen des Innen- und des Außenleiters eines Koaxialkabelendes,

   dadurch gekennzeichnet,

   daß an einem über das freie Ende des Koaxialkabels (1) stülpbaren, im wesentlichen zylindrischen, handhabbaren Gehäuse (7) ein Schälmesser (10) zum Abschälen der Außenisolierung (5), ein Trennmesser (12) zum Durchtrennen des Außenleiters (4) und des den Innenleiter (3) umgebenden Dielektrikums (6) und ein Endanschlag (19) für den Innenleiter (3) vorgesehen sind.

2. Vorrichtung nach Anspruch 1,

   dadurch gekennzeichnet,

   daß das Schälmesser (10), das Trennmesser (12) und der Endanschlag (19) in ihrer Lage relativ zum Gehäuse (7) veränderbar angeordnet sind.

3. Vorrichtung nach Anspruch 1 oder 2,

   dadurch gekennzeichnet,

   daß das Gehäuse (7) mit einer zentrischen Bohrung (20) zur Aufnahme des Koaxialkabelendes (1) ausgerüstet ist, wobei das Schälmesser (10), das Trennmesser (12) und der Endanschlag (19) dieser zentrischen Bohrung (20) zugeordnet sind.

4.  Vorrichtung nach einem der vorangehenden Ansprüche,

    dadurch gekennzeichnet,

    daß das Schälmesser (10) etwa tangential zur Aufnahmebohrung (20) des Koaxialkabelendes (1) angeordnet ist.

5.  Vorrichtung nach Anspruch 4,

    dadurch gekennzeichnet,

    daß dem Schälmesser (10) eine Austrittsöffnung (8) für den
    abgeschälten Isoliermantel (5`) zugeordnet ist.

6.  Vorrichtung nach Anspruch 4 oder 5,

    dadurch gekennzeichnet,

    daß das Schälmesser (10) in der im wesentlichen tangential
    ausgerichteten Montageebene (9) in einem spitzen Winkel
    zur Einschubachse des Koaxialkabelendes (1) angestellt
    ist.

7.  Vorrichtung nach einem der vorangehenden Ansprüche,

    dadurch gekennzeichnet,

    daß das Trennmesser (12) in einem Führungsschlitz (11) am
    Gehäuse (7) angeordnet und über eine Kulissenfläche (15)
    an einem Verstellring (16) in Richtung auf die Kabelmittelachse zu und von dort weg bewegbar angeordnet ist.

8.  Vorrichtung nach Anspruch 7,

    dadurch gekennzeichnet

daß die Kulissenfläche (15) im Verstellring (16) als
Führungsbahn für einen am Trennmesser (12) angeordneten
Zapfen ausgebildet ist, wobei die Führungsbahn (15) als
ein radial außen beginnender Bogen mit einem radial weiter
innenliegenden Endpunkt ausgebildet ist.

9. Vorrichtung nach einem der vorangehenden Ansprüche,
dadurch gekennzeichnet,
daß der Endschlag (19) für den Innenleiter (3) auf seiner
rückwärtigen Seite als Entgratungswerkzeug (22) ausgebilddet ist, das vom Innenleiter über eine rückseitige Einsteckbohrung (21) erreichbar ist.

10. Vorrichtung nach einem der vorangehenden Ansprüche,
dadurch gekennzeichnet,
daß in dem Gehäuseteil zwischen Trennmesser (12) und
Endanschlag (19) Fensterrungen (23) als Durchbrechungen
zur zentrischen Durchgangsbohrung (20) vorgesehen sind.

Fig.1

Fig.1

Fig 2

Fig. 3